# EUROPEAN PATENT SPECIFICATION

(11) **EP 1 986 373 B1**
(45) Date of publication and mention of the grant of the patent: **03.03.2010**
(21) Application number: 08007107.9
(22) Date of filing: 10.04.2008
(51) Int. Cl.: H04W 74/02

(54) **Method and system for accessing channel in wireless network of nodes**
Verfahren und System für den Kanalzugang in drahtlosen Netzwerkknoten
Procédé et système d'accès de canal dans un réseau sans fil de noeuds

(30) Priority: 10.04.2007 US 910849 P; 28.08.2007 US 845864
(43) Date of publication of application: 29.10.2008
(73) Proprietor: MITSUBISHI ELECTRIC CORPORATION, Chiyoda-ku Tokyo 100-8310 (JP)
(72) Inventor: Sahinoglu, Zafer, Clifton, NJ 07012 (US); Bhatti, Ghulam M., Mansfield MA 02048 (US); Zhang, Jinyuan, Cambridge MA 02141 (US)
(74) Representative: Pfenning, Meinig & Partner GbR

(56) References cited:
- EP-A- 1 453 258
- EP-A- 1 635 516
- EP-A- 1 659 737
- EP-A- 1 662 709
- YOUSSEF M A ET AL: "Specification and analysis of the DCF and PCF protocols in the 802.11 standard using systems of communicating machines" NETWORK PROTOCOLS, 2002. PROCEEDINGS. 10TH IEEE INTERNATIONAL CONFEREN CE ON NOV. 12-15, 2002, PISCATAWAY, NJ, USA,IEEE, 12 November 2002 (2002-11-12), pages 132-141, XP010632574 ISBN: 978-0-7695-1856-5

## Description

### BACKGROUND OF THE INVENTION

### 1. Field of the Invention

This invention relates generally to wireless communications, and more particularly to channel access and scheduling of transmissions in an ad-hoc network of low power transceivers.

### 2. Description of the Related Art

Media access control (MAC) methods attempt to avoid collisions in wireless communication networks. Typically, the MAC specifies, schedules and manages concurrent transmissions of multiple wireless devices or nodes.

A number of MAC types are known, including carrier sense multiple access (CSMA), time division multiple access (TDMA), code division multiple access (CDMA), and frequency hopping (FH). Hybrid MAC types use a combination of CSMA, TDMA and FH. Lower layers of such a network are specified by the IEEE 802.15.4 standard, incorporated herein by reference.

The standard defines the protocol and compatible interconnection for data communication devices using low-data-rate, low-power, and low-complexity short-range radio frequency (RF) transmissions in a wireless personal area network (WPAN), such as Bluetooth. The network can include coordinator and leaf nodes in a cluster-tree like network topology.

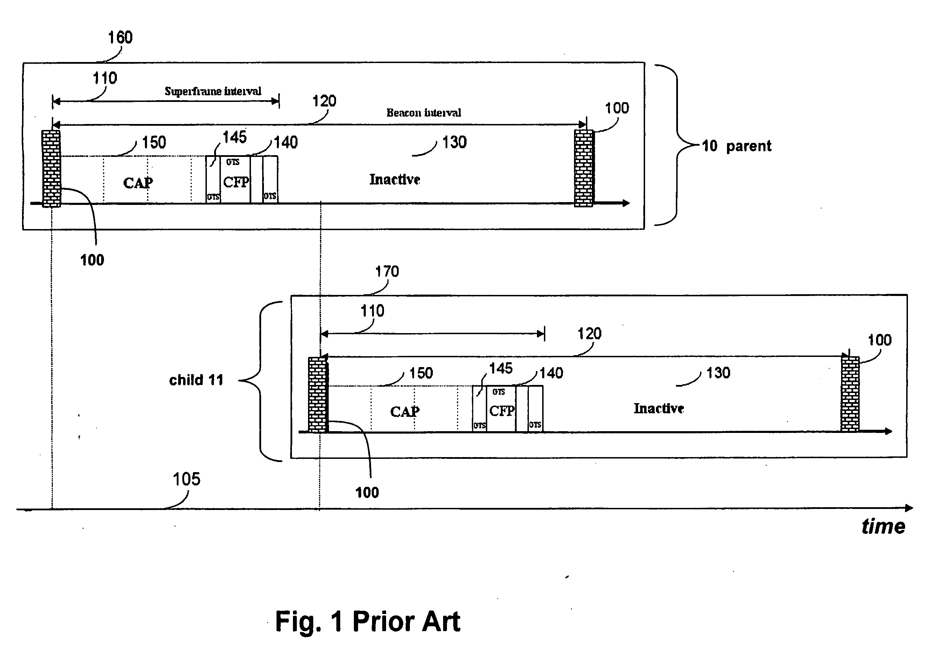

Figure 1 shows a superframe 160 according to the IEEE 802.15.4 standard. The horizontal axis 105 indicates time. Each coordinator in the network periodically transmits a beacon 100. The beacon is used for synchronization and resource allocation. An interval between two consecutive beacons is a beacon interval 120.

The superframe includes a contention access period (CAP) 150 that uses CSMA, followed by a contention free period (CFP) that uses TDMA. The CFP 140 includes guaranteed time slots (GTS) 145. Each time slots 145 is allocated to a device that requires contention free access to the channel to minimize probability of collision of its transmission with other transmissions. Typically, the CFP is used for more important traffic that must get through in time.

The CAP 150 and the CFP 140 form the active portion 110 of the superframe 160, which is followed by a much longer inactive period 130. The inactive period can be used by other coordinators, while the coordinator device of this superframe is idle and 'listens' to the channel for transmissions by the other coordinators. A child coordinator 11 can start its superframe 170 during the inactive portion 130 of the superframe 160 of its parent coordinator 12. A leaf node communicates with its parent coordinator only during the active portion 110 of the superframe 160 of its parent coordinator 10. The inactive period can be several seconds.

There are several problems with the above design.

First, the active period begins with the CAP. During the CAP, transmissions are more likely to collide than during the CFP. If a transmission of a device collides with the transmission of another device, then a retransmission is necessary. In this case, the device continues to compete with other devices for channel access to retransmit during the CAP 150. If the retransmissions continue to fails during the CAP, then the device has to wait until the next superframe to complete the transmission. This increases latency in the network, and tends to push traffic later out of time.

Second, it is also possible that transmission during the CFP can fail, for example, due to fast fading, attenuation, multi-path distortion and frequency mismatch. In these cases, retransmissions will have to wait for the CAP in the next superframe, which increases latency for the more important on-demand traffic. A GTS in the current superframe could be reassigned to a failed message, however, this decreases throughput for priority traffic.

Third, acknowledgements of successful transmissions (or not) are handled on a per GTS basis. That is, after each GTS is received, the receiver must switch to transmit mode to send the ACK, and the transmitter must switch to receive mode to receive the ACK and then switch back to transmit mode again for the next GTS. Switching modes takes time, consumes scarce power resources, increases latency and reduces throughput.

Fourth, the information in the beacon is time sensitive. This means that as time passes, the resource allocation made at the beginning of the superframe is less likely to be good as time passes. This is particularly true for frequency assignments. Thus, the reliability of the information for the important and later CFP traffic is less than the reliability of the incidental earlier traffic during the earlier CAP.

Fifth, the periodicity of the beacons is relatively low, e.g., a beacon every couple of seconds. This impacts the ability of devices to synchronize and allocate resources. If a node misses a beacon, then it has to wait a relatively long time for the next beacon.

Sixth, the frequency allocations during the active interval are fixed. It is known that wireless communications are frequency sensitive. Fixed frequency allocations are less desirable.

Seventh, the current standard does not specify when child coordinators can start their superframe during the inactive period. The inactive interval essentially uses contention based access. This increases the likelihood of collisions between superframes of child nodes, and reduces the overall performance of the network.

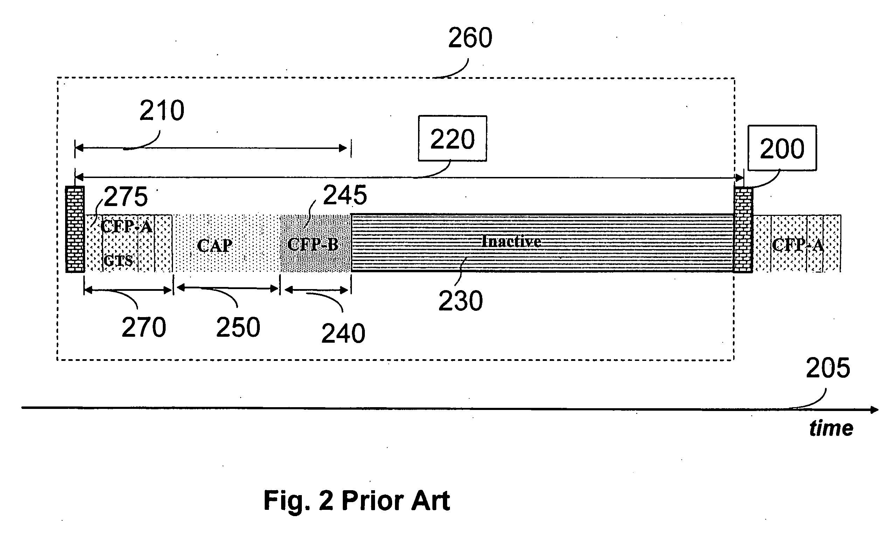

Figure 2 shows the frame structure for another hybrid channel access method with a beacon interval 220 between beacons 200. A superframe 260 includes a CFP-A 270, followed by a CAP 250 and then followed by a CFP-B 240 and an inactive 230 period, along a timeline 205. The contention access period is frequency hopped. The CFP-A and CFP-B include guaranteed time slots 275 as in the structure of Figure 1. The TDMA slots are allocated to traffic with repetitive bandwidth requirements, and periodic coordinator beacons. The CAP 250 can be used for retransmissions, unscheduled alerts, and requests for TDMA bandwidths. The CFP-B 240 includes ad-hoc TDMA slots 245. These time slots 245 can be used for unscheduled bandwidth, and high priority on-demand and low latency burst mode traffic. The superframes 260 are scheduled centrally. The TDMA slot allocation within a superframe 260 is managed by the coordinator, which controls the superframe. This structure only partially solves the problems associated with retransmission for the CFP-A. However, all of the other problems persist.

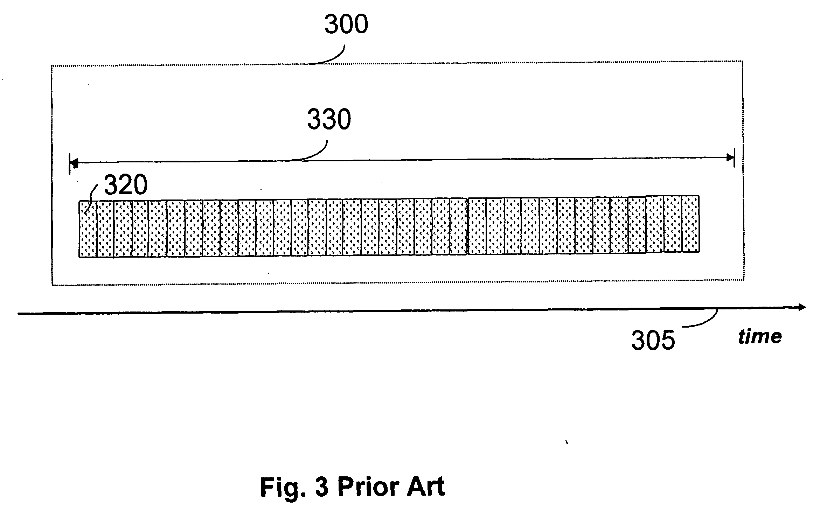

Figure 3 shows a frame structure for a time synchronized mesh protocol (TSMP) along a time line 305. The TSMP is a packet-based protocol where each transmission contains a single packet and acknowledgements are generated immediately when a packet has been received. All node-to-node communications using the TSMP are transacted in a specific time slot 320.

A sequence of the time slots 320 comprises a frame 300. The frame length 330 is counted in slots, and is a configurable parameter. A TSMP node can participate in multiple frames at one time for different tasks. The TSMP does not use beacons. For each time slot, frequency hopping is used to reduce interference. The hopping sequence and slots assignments are centrally managed.

This structure solves the long latency retransmission problems associated with the structures of Figures 1 and 2. However, this structure requires centralized network management. This means that a local failure can shut down the entire network. Also, recovery from a failure takes a long time.

EP 1 659 737 A2 discloses a method for processing packets using a superframe, which has a frame period from one beacon to the next beacon. Within a frame a contention free period is directly followed by a contention period.

Youssef M. A. et al. describes in "Specification and analysis of the DCF and PCF protocols in the 802.11 standard using systems of communicating machines" (Network Protocols, 2002. Proceedings. 10th IEEE International Conference on Nov. 12-15, 2002, Piscataway, NJ, USA, IEEE, 12 November 2002 (2002-11-12), pages 132-141) a superframe having a contention-free period followed by a contention period. The contention-free period is started by a beacon frame.

It is the objective of this invention to solve the above mentioned problem of the state of the art.

### SUMMARY OF THE INVENTION

The object of the present invention is solved by the method for accessing a channel in a wireless network of nodes according to claim 1 and the system for accessing a channel in a wireless network of nodes according to claim 9. Advantageous improvements thereof are given in the dependent claims.

A method and system access a channel in a wireless network of nodes. A coordinator transmits periodically a beacon, in which time between two consecutive beacons constitute a beacon interval.

The coordinator and other nodes transmit a superframe during the beacon interval, in which the superframe begins with an active interval, which is immediately followed by an inactive interval, and in which the active interval begins with a contention free period, which is immediately followed by a contention access period, which is immediately followed by the inactive interval.

### BRIEF DESCRIPTION OF THE DRAWINGS

Figures 1-3 are block diagrams of prior art superframes;
Figure 4A is a block diagram of a network topology used by embodiments of the invention;
Figure 4B is a block diagram of a superframe structure according to an embodiment of the invention;
Figure 5 is a block diagram of time slotting of an inactive portion of the superframe of Figure 4;
Figure 6 is a block diagram of relative timing of child and parent superframes according to an embodiment of the invention;
Figure 7 is a block diagram of a structure of a beacon according to an embodiment of the invention;
Figure 8 is a block diagram of a structure of a group acknowledgment according to an embodiment of the invention;
Figure 9 is a block diagram of a second group acknowledgement (GACK-2) according to an embodiment of the invention; and
Figure 10 is a timing diagram of message exchanges between coordinator and leaf nodes according to an embodiment of the invention.

### DETAILED DESCRIPTION OF THE PREFERRED EMBODIMENTS

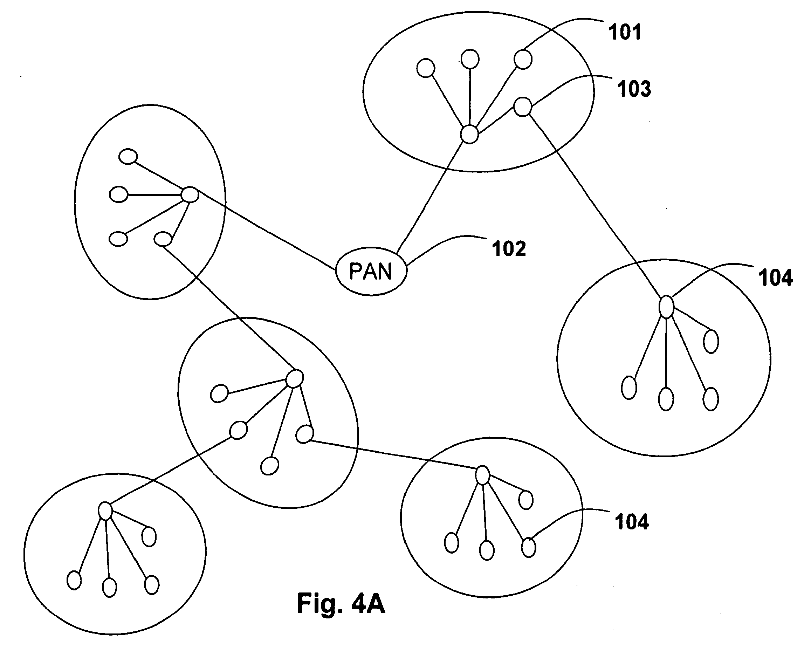

As shown in Figure 4A, a network used by the embodiments of invention can be a cluster-tree of nodes (transceiver devices) 101, with a single personal area network (PAN) coordinator 102, parent cluster coordinators 103, child coordinators 104, and leaf nodes 105.

### Frame Structure

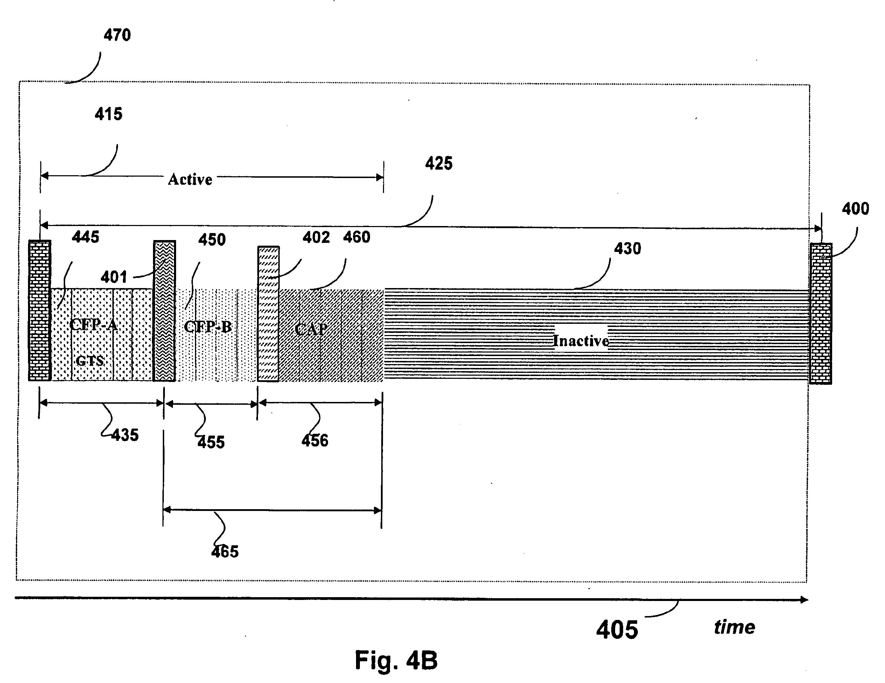

Figure 4B shows a structure of a superframe 470 according to an embodiment of the present invention along a time line 405. The superframe according to the embodiment of the invention reduces power, improves reliability, and supports low latency applications. A hybrid MAC method is also described.

The superframe is synchronized by beacons 400 during a beacon interval 425. Every coordinator node periodically transmits the beacon. The superframe has an active interval 415 and an inactive interval 430. In one embodiment, all the beacons are transmitted at the same channel frequency. In another embodiment, the beacons use frequency hopping (FH).

It should be noted that the time is not to scale in the Figures. The duration of the inactive period (measured in seconds) is much longer than the active period (measured in milliseconds).

The MAC superframe 470 includes guaranteed TDMA slots (GTS) 445 during a (first) CFP-A 435, scheduled TDMA time slots 450 for retransmissions during a (second) CFP-B 455, a CSMA access interval (CAP) 460 for latency tolerant transmissions. Each GTS within the CFP is allocated for transmission of delay sensitive traffic. The coordinator node can allocate more than one GTS to a node. The allocation also indicates the direction of traffic during the GTS, i.e., whether the node is to send or receive. Therefore, the nodes transmit during the active interval.

It should also be noted, frequencies can be allocated to the GTSs and the CAP on an individual basis, making the entire active interval frequency hopped.

In contrast with the prior art frame structure, the superframe according to the embodiments places the entire contention free period at the beginning of the superframe, followed by the contention access period. This mitigates the first, second, and fourth problems.

For transmissions during the first CFP-A, a (first) group acknowledgment message (GACK) 401 is transmitted at the end of the CFP. This addresses the third problem. Each transmission during the conventional CFP is acknowledged individually. Because the invention sends all acknowledgements at the same time as a group, the device does not need to switch between transmit and receive mode, which reduces power consumption and latency.

The GACK can also serve as an auxiliary beacon for subsequent transmissions, which improves synchronization and frequency allocation, particularly in fast fading channels. This solves the fourth, fifth and sixth problems.

If a transmission during the CFP-A fails, then it is retransmitted during the second CFP-B, perhaps at a different frequency. The different frequency is indicated by the GACK, to achieve the increase in frequency diversity. The frequency diversity increases the probability of a successful retransmission. It is known that fading, attenuation, collisions, and multi-path distortion are highly frequency sensitive in wireless channels. Therefore, any increase in frequency diversity is advantageous. Also, because the frequency allocations in the GACK are more recent, they are probably more correct than the allocations made in the beacon at the beginning of the superframe.

If the retransmission fails again during the CFP-B, then another attempt can be made during the CAP. A second GACK-2 402 indicates the frequencies to be used during the CAP. The second GACK can also be used for synchronization and updating frequency allocations. Thus, the two GACKs according to the embodiments of the invention greatly improve the overall performance of the network, and solve numerous problems associated with conventional frames.

If all transmissions during the CFP-A are successful, then no retransmission is necessary, and the CAP has a period 465.

### MAC Method

The MAC method according to an embodiment of the invention prioritizes low latency traffic to receive an immediate opportunity for two retransmissions when needed. This is made possible by the structure of the superframe as shown in Figure 4. If high priority traffic does not require any retransmission, the available bandwidth can be allocated to CSMA transmissions. If a node misses the beacon 400, then the node can recover channel information and synchronize timing using the GACK, or perhaps the GACK-2.

As stated above, the coordinator node transmits the first GACK at the end of the CFP-A, and the second GACK-2 at the end of the CFP-B. The GACKs acknowledges successful receptions (and failures) during the CFP with a bit mask. One bit is allocated in the GACKs for each GTS during the CFP. For example, if there are seven GTSs in the CFP, then the GACK include a seven bit mask. Each bit in the mask indicates whether a message is received within the corresponding GTS. The coordinator manages GTS allocation and deallocation. Therefore, the coordinator knows a-priori the structure of the GTS slots and the GACK. If a GTS transmission fails, then the source of the transmission can check the corresponding bit of the mask.

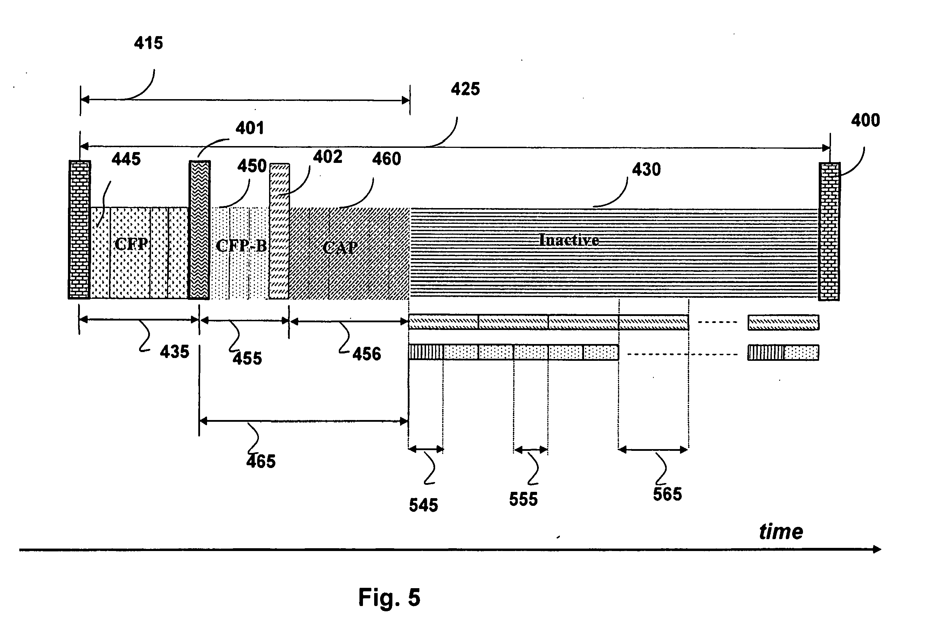

As shown in Figure 5, the inactive interval 430 of the superframe 470 according to an embodiment of the invention is partitioned into inactive time slots 565. The number of such slots is a network specified parameter. Each inactive time slot includes a main interval 545 and a guard interval 555. A child coordinator starts transmitting its superframe during the main interval of an available inactive time-slot 565 of the inactive interval of the superframe of its parent coordinator. This makes the inactive time slot unavailable for use by another child coordinator. Thus, according to this embodiment of the invention, the child nodes effectively start superframes in a contention free manner. This solves the seventh problem. The available main intervals can be used up in any order.

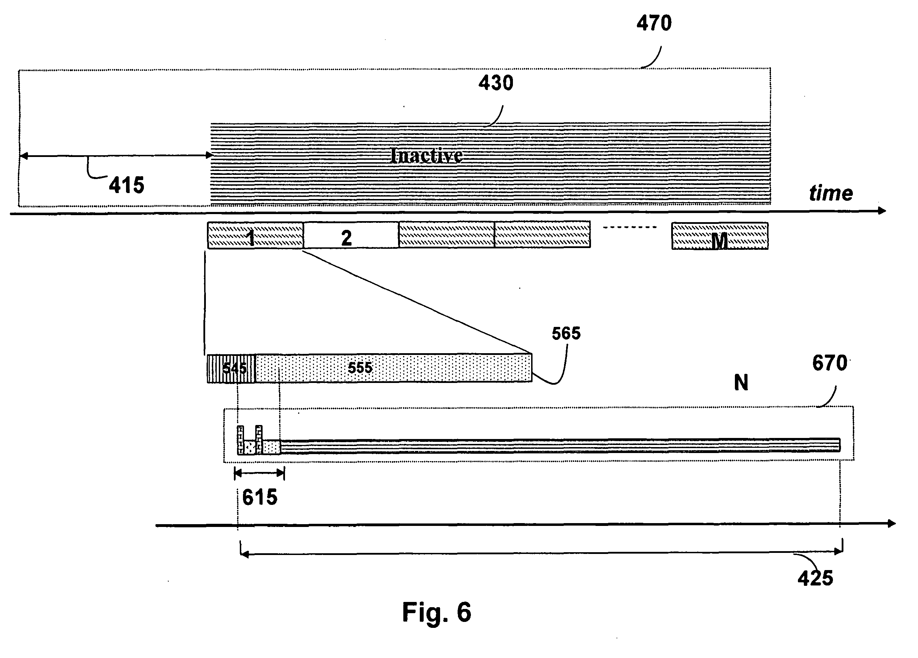

Figure 6 shows **M** inactive time slots 564. As shown in Figure 6, the combined duration of the main and guard intervals is longer than the active period 415 of the superframe 470 to prevent a potential overlap between the active periods 415 of the parent superframe 470 and the active period 615 of the superframe 670 of the child coordinator.

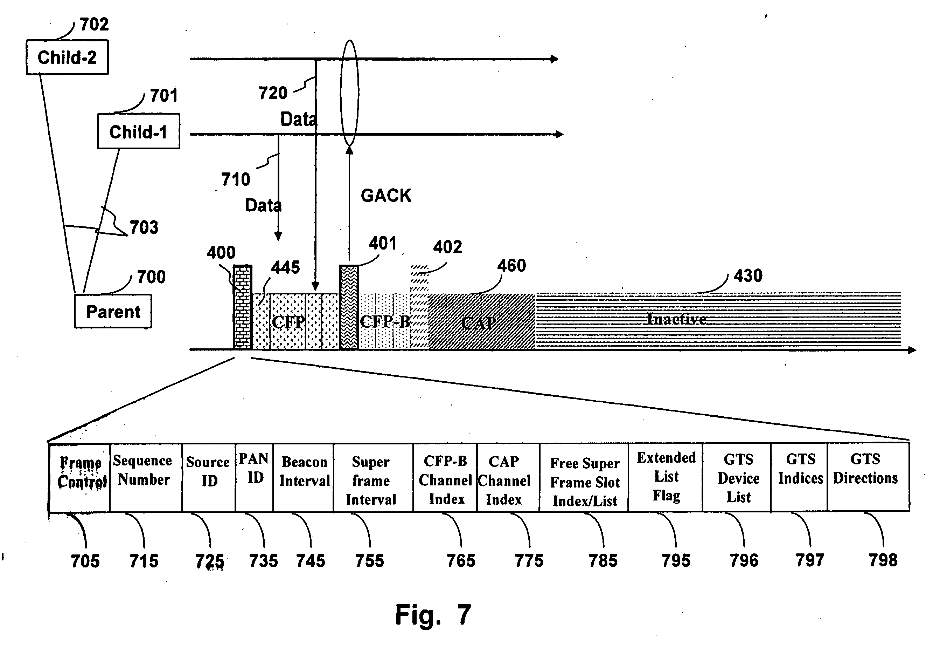

Figure 7 shows transmissions between a coordinator 700 and two leaf nodes 701 and 702. The leaf nodes 701 and 702 transmit data (packets) 710 and 720 to the parent coordinator 700 within the CFP 435 of the parent.

The GACK 401 is used to acknowledge the two transmissions 710 and 720. If any of the data transmissions 710 or 720 failed, a retransmission is performed during the CFP-B 455.

### Beacon

The beacon 400 according to an embodiment of the invention includes the following fields: Frame Control 705, Sequence Number 715, which uniquely identifies each beacon 400, Source ID 725, which identifies the source node of the beacon 400, e.g., ID of the parent coordinator 700, PAN ID 735, which identifies the network of the source device 700 of the beacon 400, Beacon Interval 745, which indicates the length of the beacon interval 425, Superframe Interval 755, which indicates the length of the superframe interval 415, CFP-B Channel Index 765, which indicates the channel index for the CFP-B period, CAP Channel Index 775, which identifies the channel index for the CAP

The Free Super Frame Slot Index/List 785 indicates lists of available main slots 545 within the inactive period 430 of the superframe 470. This field essentially implements the contention free access during the inactive interval 430.

The beacon also includes an Extended List Flag 795, which indicates that continuation of the free superframe slot/index list is given in the GACK, GTS Device List 796, which lists the devices that have assigned GTSs 445, GTS Indices 797, which lists the GTS index for each assigned device in the same order as the GTS device list 796, and GTS Directions 798, which indicates whether GTSs 445 are for transmit or receive for the devices in the GTS device list 796.

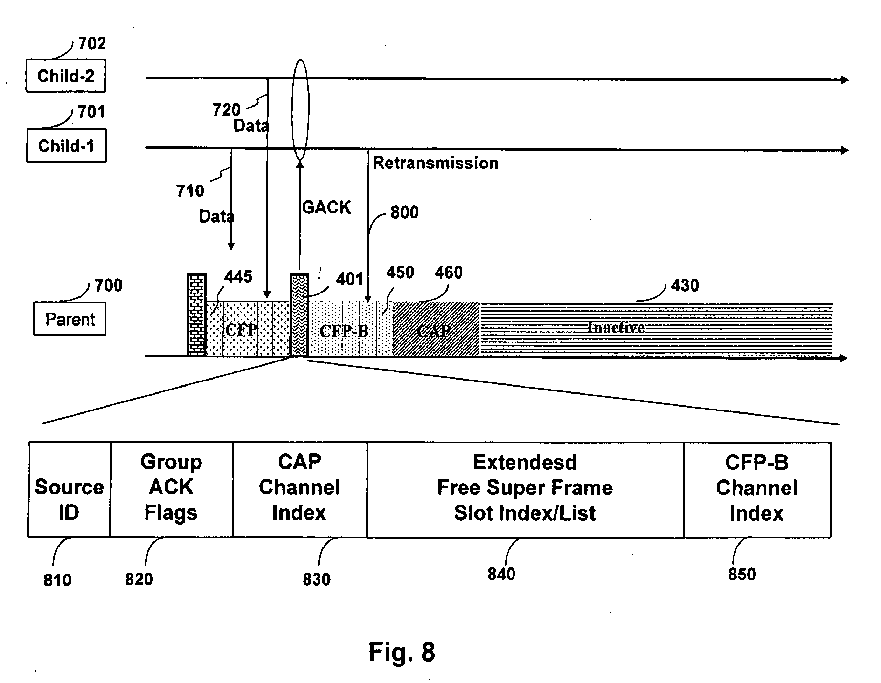

Figure 8 shows the fields of the GACK 401: Source ID 810, which identifies the source of the GACK, e.g., the parent coordinator 700, Group ACK Flags 820, which indicate whether transmissions received within corresponding GTSs were successful, CAP Channel Index 830, which indicates the frequency of the channel for the CAP period, Extended Free Super Frame Slot Index/List 840, which indicates the continuation of the free super frame slots 785 in the beacon, and the CFP-B Channel Index 850, which indicates the frequency of the channel for the CFP-B 455.

The GACK serves the following purposes. The GACK provides acknowledgment for a group of transmissions during the CFP. The GACK reduces power consumption because the coordinator does not need to switch between transmit and receive modes during each GTS. A device retransmits within the CFP-B 455 using the frequency indicated by the CFP-B channel index 850. This lowers per hop latency and decreases interference. The parent can combine erroneous transmissions from the CFP 435 and the CFP-B 455, and apply a hybrid ARQ scheme, e.g., a chase combining, to decode data. The GACK can also be used for synchronization.

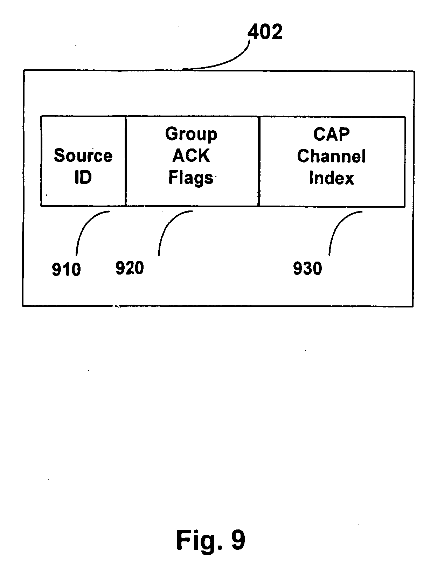

Figure 9 shows the content of the GACK-2 402. The GACK-2 includes the following fields: Source ID 910, which identifies the source device of the GACK-2, Group ACK flags 920, which indicates the ACK flags for the retransmissions within the CFP-B 455, and the CAP Channel Index 930, which indicates the index of the channel for the CAP period 456.

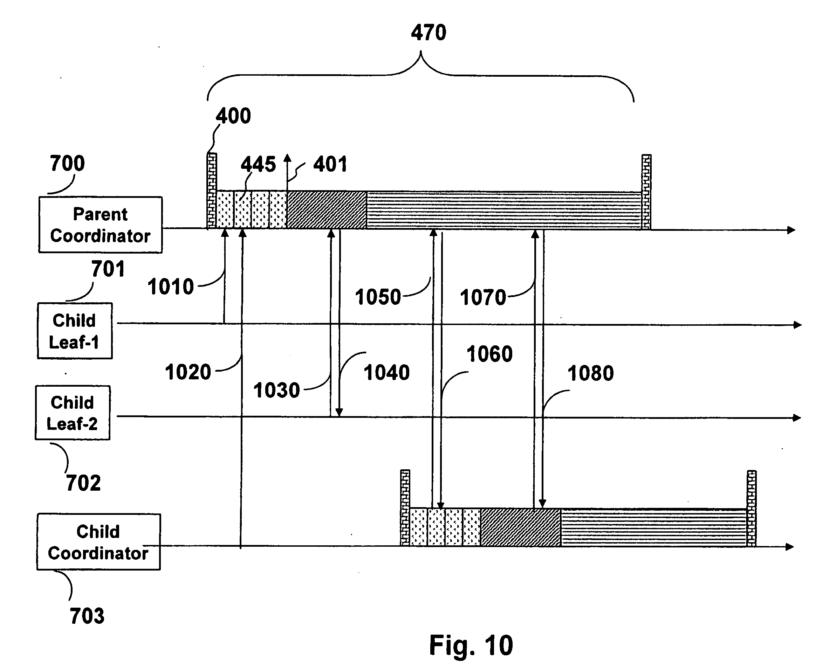

As shown in Figure 10, a parent coordinator 700 can receive messages from leaf child devices 701 and 702 during the CFP 435 and the CAP 456 of its own superframe 470. For messages 1010 and 1020 received during the CFP 435, the parent coordinator 700 transmits a single group acknowledgment 401. For a message 1030 received during the CAP 456 of its own superframe 470, the parent coordinator 700 transmits an individual acknowledgment 1040.

If the parent coordinator 700 receives a message 1050 from a child coordinator 703 during the inactive period 430 of its superframe 470, then the parent sends back an acknowledgment 1060. Similarly, if the parent coordinator 700 receives a message 1070 from a child coordinator 703 during the inactive period 430 of its superframe 470 and during the CAP 456 of the child coordinator 703 superframe, then the parent coordinator 700 sends back an acknowledgment 1080.

## Claims

1. A method for accessing a channel in a wireless network of nodes, comprising:
transmitting periodically a beacon (100) by a coordinator node of a wireless network, in which time between two consecutive beacons constitute a beacon interval (120); and
transmitting a superframe (160,170) during the beacon interval (120), in which the superframe (160,170) begins with an active interval, which is immediately followed by an inactive interval (130), and in which the active interval begins with a contention free period, which is immediately followed by a contention access period, which is immediately followed by the inactive interval (130),
**characterized in** comprising
partitioning the contention free period into a first contention free period CFP-A and a second contention free period CFP-B; and
acknowledging all messages in the CFP-A with a first group acknowledgement message and all messages in the CFP-B with a second group acknowledgement message.

2. The method of claim 1, further comprising:
frequency hopping for the entire active interval.

3. The method of claim 2, in which frequencies for the frequency hopping are allocated by the beacon (100).

4. The method of claim 1, in which the contention free period includes a plurality of guaranteed time slots (275) for transmitting message, and further comprising:
acknowledging all messages in the guaranteed time slots (275) with a single group acknowledgement message at an end of the contention free period.

5. The method of claim 4, further comprising:
allocating frequencies for subsequent transmissions with the group acknowledgement message.

6. The method of claim 4, in which the group acknowledgement message includes one bit for each guaranteed time slot (275) for the acknowledging.

7. The method of claim 1, further comprising:
partitioning the inactive interval (130) into a plurality of inactive time slots (565) to enable other coordinator to start transmitting superframes (160,170) in a contention free manner.

8. The method of claim 7, in which each inactive time slot (565) includes a main interval and a guard interval, and a combined duration of the main and guard intervals is longer than the active period.

9. A system for accessing a channel in a wireless network of nodes, comprising:
a coordinator mode adapted to transmit periodically a beacon (100), wherein the time between two consecutive beacons constitute a beacon interval (120); and
means for transmitting a superframe (160,170) during the beacon interval (120), in which the superframe (160,170) begins with an active interval, which is immediately followed by an inactive interval (130), and in which the active interval begins with a contention free period, which is immediately followed by a contention access period, which is immediately followed by the inactive interval (130)
**characterized in that**
the contention free period comprises a first contention free period CFP-A and a second contention free period CFP-B; and **in that** the system further includes means for acknowledging
all messages in the CFP-A with a first group acknowledgement message and all messages in the CFP-B with a second group acknowledgement message.

## Patentansprüche

1. Verfahren zum Zugreifen zu einem Kanal in einem drahtlosen Netzwerk von Knoten, welches aufweist:
periodisches Übertragen einer Bake (100) durch einen Koordinatorknoten eines drahtlosen Netzwerks, in welchem die Zeit zwischen zwei aufeinander folgenden Baken ein Bakenintervall (120) bildet; und
Übertragen eines Superrahmens (160, 170) während des Bakenintervalls (120), in welchem der Superrahmen (160, 170) mit einem aktiven Intervall beginnt, dem unmittelbar ein inaktives Intervall (130) folgt, und in welchem das aktive Intervall mit einer konkurrenzfreien Periode beginnt, der unmittelbar eine Konkurrenzzugriffsperiode folgt, der unmittelbar das inaktive Intervall (130) folgt,
**gekennzeichnet durch**
Teilen der konkurrenzfreien Periode in eine erste konkurrenzfreie Periode CFP-A und eine zweite konkurrenzfreie Periode CFP-B; und Quittieren sämtlicher Nachrichten in der CFP-A mit einer ersten Gruppenquittierungsnachricht und sämtlicher Nachrichten in der CFP-B mit einer zweiten Gruppenquittierungsnachricht.

2. Verfahren nach Anspruch 1, weiterhin aufweisend:
Frequenzspringen für das gesamte aktive Intervall.

3. Verfahren nach Anspruch 2, bei dem Frequenzen für das Frequenzspringen durch die Bake (100) zugewiesen werden.

4. Verfahren nach Anspruch 1, bei dem die konkurrenzfreie Periode mehrere zugesicherte Zeitschlitze (275) zur Nachrichtenübertragung enthält, und weiterhin aufweisend:
Quittieren aller Nachrichten in den zugesicherten Zeitschlitzen (275) mit einer einzelnen Gruppenquittierungsnachricht an einem Ende der konkurrenzfreien Periode.

5. Verfahren nach Anspruch 4, weiterhin aufweisend:
Zuweisen von Frequenzen für nachfolgende Übertragungen mit der Gruppenquittierungsnachricht.

6. Verfahren nach Anspruch 4, bei dem die Gruppenquittierungsnachricht ein Bit für jeden zugesicherten Zeitschlitz (275) für die Quittierung enthält.

7. Verfahren nach Anspruch 1, weiterhin aufweisend:
Teilen des inaktiven Intervalls (130) in mehrere inaktive Zeitschlitze (265), um einen anderen Koordinator freizugeben für den Start der Übertragung von Superrahmen (160, 170) in einer konkurrenzfreien Weise.

8. Verfahren nach Anspruch 7, bei dem jeder inaktive Zeitschlitz (565) ein Hauptintervall und ein Schutzintervall enthält und eine kombinierte Dauer des Haupt- und des Schutzintervalls länger als die aktive Periode ist.

9. System zum Zugreifen zu einem Kanal in einem drahtlosen Netzwerk aus Knoten, welches aufweist:
einen Koordinatorknoten, der ausgebildet ist zum periodischen Übertagen einer Bake (100), wobei die Zeit zwischen zwei aufeinanderfolgenden Baken ein Bakenintervall (120) bildet; und Mittel zum Übertagen eines Superrahmens (160, 170) während des Bakenintervalls (120), wobei der Superrahmen (160, 170) mit einem aktiven Intervall beginnt, dem unmittelbar ein inaktives Intervall (130) folgt, und wobei das aktive Intervall mit einer konkurrenzfreien Periode beginnt, der unmittelbar eine Konkurrenzzugriffsperiode folgt, der unmittelbar das inaktive Intervall (130) folgt,
**dadurch gekennzeichnet, dass**
die konkurrenzfreie Periode eine erste konkurrenzfreie Periode CFP-A und eine zweite konkurrenzfreie Periode CFP-B aufweist; und dass das System weiterhin Mittel zum Quittieren aller Nachrichten in der CFP-A mit einer ersten Gruppenquittierungsnachricht und aller Nachrichten in der CFP-B mit einer zweiten Gruppenquittierungsnachricht enthält.

## Revendications

1. Procédé destiné à accéder à un canal dans un réseau de noeuds sans fil, comprenant les étapes consistant à :
faire émettre de manière périodique une balise (100) par un noeud coordinateur d'un réseau sans fil, dans lequel le temps qui sépare deux balises consécutives constitue un intervalle de balise (120) ; et
émettre une supertrame (160, 170) pendant l'intervalle de balise (120), dans lequel la supertrame (160, 170) commence par un intervalle actif, lequel est immédiatement suivi par un intervalle inactif (130), et dans lequel l'intervalle actif commence par une période sans conflit, qui est immédiatement suivie par une période d'accès avec conflit, qui est immédiatement suivie par l'intervalle inactif (130) ;
**caractérisé en ce qu'**il comprend les étapes consistant à :
scinder la période sans conflit en une première période sans conflit CFP - A et en une deuxième période sans conflit CFP - B ; et
accuser réception de tous les messages dans la CFP - A avec un premier message d'accusé de réception de groupe et tous les messages dans la CFP - B avec un deuxième message d'accusé de réception de groupe.

2. Procédé selon la revendication 1, comprenant en outre l'étape consistant à :
faire subir un saut de fréquence à tout l'intervalle actif.

3. Procédé selon la revendication 2, dans lequel les fréquences du saut de fréquence sont attribuées par la balise (100).

4. Procédé selon la revendication 1, dans lequel la période sans conflit comprend une pluralité de tranches de temps garanties (275) pour émettre le message, et comprenant en outre l'étape consistant à :
accuser réception de tous les messages dans les tranches de temps garanties (275) avec un seul message d'accusé de réception de groupe à la fin de la période sans conflit.

5. Procédé selon la revendication 4, comprenant en outre l'étape consistant à :
attribuer des fréquences pour les émissions ultérieures avec le message d'accusé de réception de groupe.

6. Procédé selon la revendication 4, dans lequel le message d'accusé de réception de groupe comprend un bit pour chaque tranche de temps garantie (275) pour l'accusé de réception.

7. Procédé selon la revendication 1, comprenant en outre l'étape consistant à :
scinder l'intervalle inactif (130) en une pluralité de tranches de temps inactives (565) de manière à permettre à un autre coordinateur de commencer à émettre des supertrames (160, 170) d'une façon sans conflit.

8. Procédé selon la revendication 7, dans lequel chaque tranche de temps inactive (565) comprend un intervalle principal et un intervalle de garde, et la durée combinée des intervalles principaux et de garde est plus longue que la période active.

9. Système destiné à accéder à un canal dans un réseau de noeuds sans fil, comprenant :
un noeud coordinateur adapté de façon à émettre de manière périodique une balise (100), dans lequel le temps qui sépare deux balises consécutives constitue un intervalle de balise (120) ; et
des moyens destinés à émettre une supertrame (160, 170) pendant l'intervalle de balise (120), dans lequel la supertrame (160, 170) commence par un intervalle actif, lequel est immédiatement suivi par un intervalle inactif (130), et dans lequel l'intervalle actif commence par une période sans conflit, qui est immédiatement suivie par une période d'accès avec conflit, qui est immédiatement suivie par l'intervalle inactif (130) ;
**caractérisé en ce que :**
la période sans conflit comprend une première période sans conflit CFP - A et une deuxième période sans conflit CFP - B ; et
**en ce que** :
le système comprend en outre des moyens destinés à accuser réception de tous les messages dans la CFP - A avec un premier message d'accusé de réception de groupe et tous les messages dans la CFP - B avec un deuxième message d'accusé de réception de groupe.
